# EUROPEAN PATENT APPLICATION

(11) **EP 4 414 090 A1**
(43) Date of publication of application: **14.08.2024**
(21) Application number: 24151817.4
(22) Date of filing: 15.01.2024
(51) Int. Cl.: B06B 1/06, G10K 9/122

(54) **ULTRASONIC TRANSDUCERS WITH MALLEABLE BACKING MEMBERS**

(30) Priority: 07.02.2023 US 202318106733
(71) Applicant: Baker Hughes Holdings LLC, Houston, TX 77073 (US)
(72) Inventor: GANESAN, Baskaran, Acton, 01720 (US); MICELI, Joel Andrew, Houston, 77073 (US); KOWAL, Anthony, Houston, 77073 (US)
(74) Representative: Illingworth-Law, William Illingworth

(57) **Abstract**

An ultrasonic transducer system and apparatus is provided. The ultrasonic transducer apparatus comprises an enclosure including an impedance matching member, at least one piezoelectric component, an adhesive material, and a backing member including a plurality of apertures disposed thereupon, the impedance matching member is coupled to a first surface of the at least one piezoelectric component and the backing member is coupled to a second surface of the at least one piezoelectric component, the first surface is diametrically opposed to the second surface, the adhesive material is disposed between the at least one piezoelectric component and the backing member for coupling the at least one piezoelectric component to the backing member, and between the at least one piezoelectric component and the impedance matching member for coupling the at least one piezoelectric component to the impedance matching member.

## Description

### TECHNICAL FIELD

The subject matter described herein generally relates to ultrasonic transducers, and more particularly, to ultrasonic transducers disposed in flow meters.

### BACKGROUND

Flow meters of various types are utilized to measure different characteristics of fluids such as velocity, acceleration, and so forth. One such flow meter, an ultrasonic flow meter, is widely used in the oil and gas industry and operates to measure a velocity of a fluid that travels through pipes of various shapes and dimensions. In particular, the ultrasonic flow meter may include one or more ultrasonic transducers that generate, emit, and receive sounds waves and enable the ultrasonic flow meter to determine fluid velocity through a pipe by measuring various travel times associated with these sound waves.

These ultrasonic transducers include attenuating components that dampen the vibration capability of these transducers, which in turn limit the ability of these transducers to generate sounds waves at particular frequencies.

### SUMMARY

Aperture filled backing based ultrasonic transducer systems and ultrasonic transducer apparatuses are provided. In one aspect, an ultrasonic transducer comprises an enclosure including an impedance matching member, at least one piezoelectric component, an adhesive material, and a backing member including a plurality of apertures disposed thereupon. In aspects, the impedance matching member is coupled to a first surface of the at least one piezoelectric component and the backing member is coupled to a second surface of the at least one piezoelectric component, the first surface is diametrically opposed to the second surface. In aspects, the adhesive material is disposed between the at least one piezoelectric component and the backing member for coupling the at least one piezoelectric component to the backing member, and between the at least one piezoelectric component and the impedance matching member for coupling the at least one piezoelectric component to the impedance matching member.

In another aspect, a method comprises disposing an impedance matching member, at least one piezoelectric component, an adhesive material, and a backing member within an enclosure, the backing member including a plurality of apertures, positioning a portion of the adhesive material between the at least one piezoelectric component and the backing member, coupling, using the portion of the adhesive material, the backing member to a first surface of the at least one piezoelectric component using the adhesive material, positioning an additional portion of the adhesive material between the at least one piezoelectric component and the impedance matching member, and coupling, using the additional portion of the adhesive material, the impedance matching member to a second surface of the at least one piezoelectric component, wherein the first surface is diametrically opposed to the second surface.

In another aspect, an ultrasonic transducer system comprises an enclosure including an impedance matching member, at least one piezoelectric component, an adhesive material, and a backing member including a plurality of apertures disposed thereupon in accordance with a pattern, the impedance matching member is coupled to a bottom surface of the at least one piezoelectric component and the backing member is coupled to a top surface of the at least one piezoelectric component, the bottom surface is diametrically opposed to the top surface, the adhesive material disposed between the at least one piezoelectric component and the backing member for coupling the at least one piezoelectric component to the backing member, and between the at least one piezoelectric component and the impedance matching member for coupling the at least one piezoelectric component to the impedance matching member.

### BRIEF DESCRIPTION OF THE DRAWINGS

The aspects herein may be better understood by referring to the following description in conjunction with the accompanying drawings in which like reference numerals indicate identically or functionally similar elements, of which:
FIG. 1 is a cross-sectional view of a flow meter in which an ultrasonic transducer, as described in the present disclosure, is disposed;
FIG. 2A is a cross-sectional side view of the ultrasonic transducer of FIG. 1 with a plurality of components disposed therein;
FIG. 2B is a cross-sectional side view of the ultrasonic transducer with an example backing member that includes a plurality of apertures, according to one or more aspects described and illustrated herein;
FIG. 2C depicts a cross-sectional side view of the ultrasonic transducer with a filler or adhesive material that may be utilized to adhere the example backing member to a top surface of the piezoelectric component and an impedance matching member to a bottom surface of the piezoelectric component;
FIG. 3A depicts a cross-sectional side view of a design of an example ultrasonic transducer that is conventionally available;
FIG. 3B depicts a cross-sectional side view of the ultrasonic transducer that is illustrated in FIGS. 1 and 2A and which addresses and overcomes the deficiencies of the example ultrasonic transducer depicted in FIG. 3A;
FIG. 4 depicts a cross-sectional side view of the ultrasonic transducer and a representation of an oscillation of the piezoelectric component and the resulting oscillation of the example backing member of the ultrasonic transducer, according to one or more aspects described and illustrated herein;
FIG. 5 depicts a flow chart for configuring various parts of the ultrasonic transducer, according to one or more aspects described and illustrated herein; and
FIG. 6 depicts a trained machine learning (ML) model that may be utilized to design the example backing members of the ultrasonic transducer, according to one or more aspects described and illustrated herein.

It should be understood that the above-referenced drawings are not necessarily to scale, presenting a somewhat simplified representation of various preferred features illustrative of the basic principles of the disclosure. The specific design features of the present disclosure, including, for example, specific dimensions, orientations, locations, and shapes, will be determined in part by the particular intended application and use environment.

### DETAILED DESCRIPTION

Ultrasonic flow meters are widely used to measure velocities of fluids that travel through pipes of various shapes and dimensions. In particular, the ultrasonic flow meter may include one or more ultrasonic transducers that generate, emit, and receive sounds waves and enable the ultrasonic flow meter to determine fluid velocity through a pipe by measuring various travel times associated with sound waves that contact the fluid and travel from one transducer to another. Conventionally, ultrasonic transducers include rigid attenuating components that are disposed on various surfaces of one or more piezoelectric crystals that are included in these transducers. While these attenuating components provide a level of stability to the transducer, they operate to significantly dampen or reduce the vibration capabilities of these transducers, which in turn reduces the ability of these transducers to generate sound waves that correspond to particular frequencies, e.g., a higher range of frequencies. As such, the applicability of conventional transducers is limited.

Accordingly, the ultrasonic transducers with a flexible and malleable backing member, as described in the present disclosure, address and overcome the above described deficiencies. In particular, the flexible and malleable backing member may be designed to have a density and mass that is lower than the attenuating components that are utilized in conventional ultrasonic transducers. Further, in aspects, the backing member may include a plurality of apertures that correspond to various geometric shapes, e.g., triangle, hexagon, circle, square, and so forth. Due to these factors, the backing member, which may be disposed on a top surface of a piezoelectric component that is included as part of the ultrasonic transducer, may operate to vibrate or oscillate at a rate that is substantially similar to the rate of oscillation of the piezoelectric component. As a result, the piezoelectric component may operate to generate sound waves at frequencies and that are much higher than the sound waves that may be generated by the transducers that include the above described attenuating component. Furthermore, due to the flexible characteristic of the backing member, the piezoelectric component may vibrate in multiple modes or orientations, e.g., longitudinal orientation and/or radial orientation. Conventionally, the ability of the piezoelectric component to vibrate in these modes may be limited by the heavier attenuating component. It is noted that the ultrasonic transducers with flexible and malleable backing members provides numerous advantages over conventional ultrasonic transducer designs. In particular, the use of the flexible backing members provides these transducers with various advantages such as an improved signal penetration power, a higher level of signal transmission, and a more robust signal shape for the sound generated by the piezoelectric components included in these transducers. Additionally, another advantage of the ultrasonic transducers with the flexible and malleable backing members, as described in the present disclosure, is that such backing members are more robust and durable as compared to conventional filler-based backings. In particular, unlike conventional filler-based backings, the malleable backing members are resistant to instances of severing or delamination. Yet another advantage is that the malleable backings, as described herein, may be designed in various sizes and geometries such that a signal shape and a signal strength that corresponds to a particular threshold may be achieved.

Aspects of ultrasonic transducers with malleable backings are described with greater detail below.

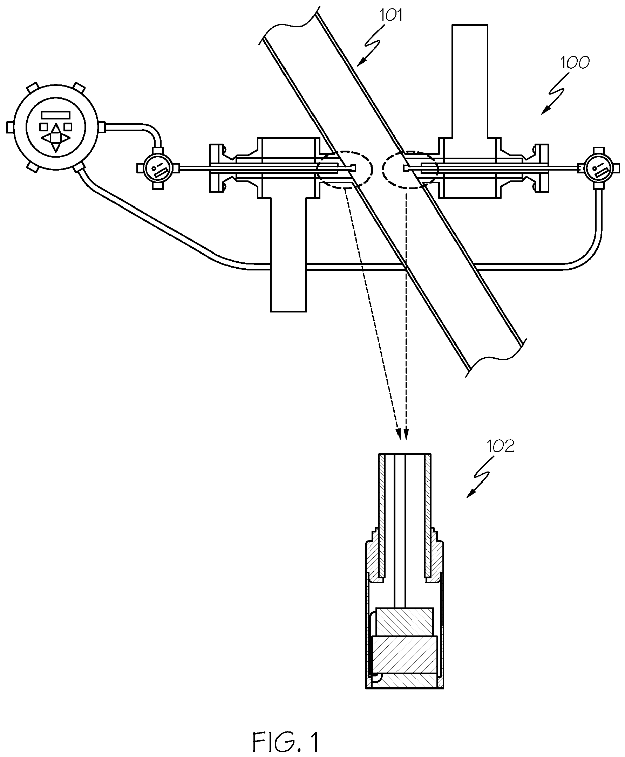

FIG. 1 depicts an illustration of an ultrasonic flow meter 100 in which an ultrasonic transducer 102, as described in the present disclosure, is disposed. Broadly speaking, flow meters are devices that are utilized to quantify the rate or volume of liquid, gas, or vapor that moves through a component, e.g., a pipe or a conduit. In particular, flow meters quantify the rate or volume of liquid, gas, or vapor by measuring linear, non-linear, mass, or volumetric flow rates. Flow meters are utilized in industrial plants, oil fields, wastewater treatment facilities, and so forth. Various types of flow meters are currently available and in wide use, e.g., differential pressure flow meters, magnetic meters, multiphase meters, ultrasonic flow meters, vortex meters, and so forth. Ultrasonic flow meters are often used in the oil and gas industry, in particular, in conduits and piping that operate to extract oil, natural gas, and other fluids from surfaces. In aspects, the ultrasonic flow meters operate to measure a velocity of a fluid that travels through a pipe by measuring the travel time of sounds waves emitted by ultrasonic transducers disposed in these flow meters.

For example, as illustrated in FIG. 1, the ultrasonic flow meter 100 may be positioned on an outer surface of a pipe 101 through which fluid flows. In operation, the ultrasonic flow meter 100 may include the ultrasonic transducer 102, which may be disposed on an outer surface of the pipe 101 and may operate in conjunction with another ultrasonic transducer (e.g., another one of the ultrasonic transducer 102) that is disposed in an opposing location and on another portion of the outside surface of the pipe 101. Thereafter, each one of the ultrasonic transducers may transmit an ultrasonic burst to the other transducer and receive a burst from the other transducer. The ultrasonic flow meter 100 may measure the time that it takes for the burst to travel from one transducer to another and utilize this time to determine a velocity of the fluid that may be flowing through the pipe 101. Broadly speaking, the ultrasonic transducer 102 operates to produce sound waves by converting an electrical energy based pulse into a mechanical energy in the form of a sound wave. The transducer may then transmit the sounds wave (e.g., to another transducer through a fluid) in order to facilitate measurement of various fluid characteristics, e.g., fluid velocity, and so forth.

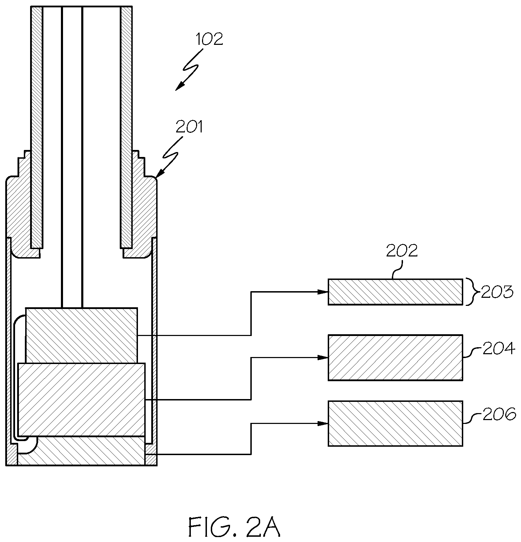

FIG. 2A depicts a cross section of the ultrasonic transducer 102 with a plurality of components disposed therein, according to one or more aspects described and illustrated herein. In the illustrated embodiment, the ultrasonic transducer 102 includes a housing or enclosure 201 that may be formed of titanium, tungsten carbide, cobalt, or other comparable materials. The enclosure 201 may have a substantially cylindrical shape. The enclosure 201 may be designed to be robust and waterproof and include a plurality of components. As illustrated in FIG. 2A, the ultrasonic transducer 102 may include an example backing member 202, at least one piezoelectric component 204, and an impedance matching member 206. In aspects, the example backing member 202 may be disposed or adhered to a top surface of the piezoelectric component 204 and the impedance matching member 206 may be adhered or disposed to the bottom surface of the piezoelectric component 204.

In certain embodiments, the piezoelectric component 204 may be composed of piezoelectric materials such as quartz, lead zicronate titanate, barium titanate, lithium niobate, and so forth. These materials are non-limiting examples. In certain embodiments, the example backing member 202 may be formed of a flexible, malleable, and durable material. In aspects, the impedance matching member 206 may be formed of materials that provide acoustic attenuation that is below a particular threshold and shear sound that is less than a particular threshold. Additionally, the impedance matching member 206 may operate to restrict distortion to a particular threshold. In particular, the example backing member 202 may be formed of a material that has a density in the range of, e.g., 350 kilograms per cubic meter to 500 kilograms per cubic meter. The density range of 350 kilograms per cubic meter to 500 kilograms per cubic meter is a non-limiting example. It is noted that other density ranges are also contemplated. In aspects, the density range may be lower for flat sections or portions of the backing that do not include apertures and may be higher for backings with various apertures that correspond to various geometric shapes e.g., triangle, hexagon, circle, square, and so forth. Further, the example backing member 202 may have a thickness 203 in the range of approximately 2 millimeters to 10 millimeters. However, it is noted that other thickness values and/or value ranges are also contemplated. In particular, the thickness 203 of the example backing member 202 may be tuned or modified based on various factors, e.g., density of the example backing member 202 and a sound speed. Such a density and thickness range enables the example backing member 202 to substantially conform with the movement (e.g., vibration) of the piezoelectric component 204 without dampening or attenuating the movement of the piezoelectric component 204.

For example, in operation, the piezoelectric component 204 may receive an electric signal (e.g., from a battery or a power source that is external to or included as part of the ultrasonic transducer 102) and convert this electric signal into a sound wave by vibrating or oscillating at a particular rate and in accordance with a particular orientation. For example, the piezoelectric component 204 may vibrate or oscillate in accordance with a longitudinal configuration or a radial configuration.

Based on such oscillation, the example backing member 202 (which is disposed on the top surface of the piezoelectric component 204) may also oscillate at rate that is similar to the rate at which the piezoelectric component 204 oscillates. However, due to the position of the example backing member 202 and the density and thickness of the backing member 202, the oscillation or vibration rate of the piezoelectric component 204 is not reduced or damped. Simultaneously, the manner of oscillation and the desired frequency of the piezoelectric component 204 satisfies a threshold frequency value in a stable manner. In other words, the piezoelectric component 204 may oscillate in a stable and consistent manner without experiencing any dampening of attenuation due to the positioning and other characteristics of the example backing member 202 adhered to it. Further, the density, thickness, and orientation of the backing member 202 relative to the piezoelectric component 204 may enable the ultrasonic transducer 102 to generate sounds waves at higher frequencies as compared to conventional ultrasonic transducers, as described in greater detail below.

Conventionally, an ultrasonic transducer may include a particular component (e.g., a dampening component or an attenuating component) that is disposed on a top portion of a piezoelectric crystal and is operable to attenuate or dampen the vibration of the piezoelectric crystal in order to generate a sharper signal. However, the result of such an attenuating component is that the overall vibration or oscillation rate of the piezoelectric crystal is reduced, which in turn reduces the overall sound wave frequency that the ultrasonic transducer may generate. In contrast, the use of the example backing member 202 enables the piezoelectric component 204 to vibrate or oscillate at a higher rate, which in turn enables the ultrasonic transducer 102 to generate sound waves at higher frequencies. For example, the use of the example backing member 202 may enable the ultrasonic transducer 102 to generate a sound wave having a frequency that is in the range of approximately 200 KHz, while the frequency generated by an ultrasonic transducer that uses an attenuating component (which is denser and heavier than the example backing member 202), may enable the ultrasonic transducer to generate a sound wave with a frequency that is significantly lower than the frequency range of 200 KHz, e.g., 50 KHz to 100 KHz. In aspects, the use of the example backing member 202 provides the ultrasonic transducer 102 with various advantages, e.g., improved signal penetration power and a higher level of signal transmission. Further, in aspects, the use of the example backing member 202 also provides a more robust signal shape for the sound generated by the piezoelectric component 204. In aspects, the robust signal shape corresponds to a value of 4-6 cycles to the peak and a dampening (i.e. high decay rate) that is in excess of a maximum peak value up to a minimum of 40% to 60%. In aspects, as stated above, the shape of the signal may be modified to suit higher and lower bandwidths by tuning or modifying the geometry and dimensions of the example backing member 202. Further, the use of the example backing member 202 enables the maintaining of a signal transmission and shape at a particular level while simultaneously providing signal damping that satisfies a particular threshold.

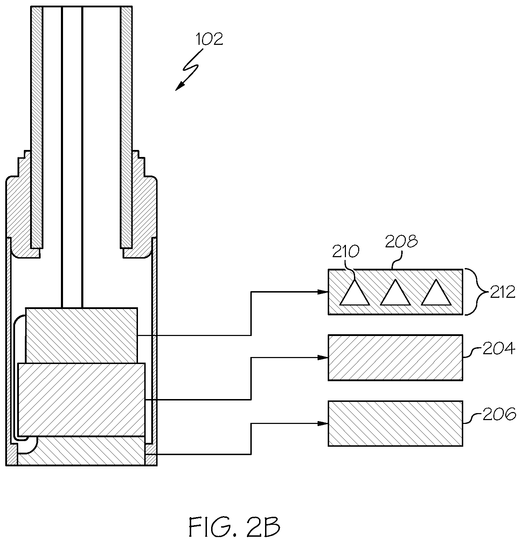

FIG. 2B depicts the ultrasonic transducer 102 with an example backing member 208 that includes a plurality of apertures 210. Unlike the example backing member 202 illustrated in FIG. 2A, the example backing member 208 may have an example thickness 212 that is larger than the example thickness 203. However, the plurality of apertures 210 may be configured on the example backing member 208 in order to reduce the overall mass of the example backing member 208 such that the example backing member 208 operates in a manner that is substantially similar to the operation of the example backing member 202. While the plurality of apertures 210 correspond to a triangle configuration, these apertures 210 may be formed in a variety of other configurations, e.g., a hexagonal configuration, a square configuration, or a circle configuration, and so forth. Any combination of these configurations may be utilized to form the plurality of apertures 210.

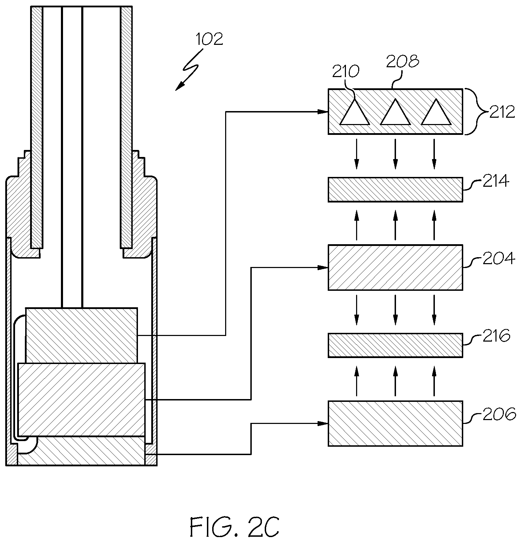

FIG. 2C depicts a filler or adhesive material that may be utilized to adhere the example backing member 208 to a top surface of the piezoelectric component 204 and an impedance matching member 206 to a bottom surface of the piezoelectric component 204. It is noted that the adhesive material of the filler may be distributed throughout various portions of the ultrasonic transducer 102. As illustrated in FIG. 2C, a first portion 214 of the adhesive material may be disposed between the top surface of the piezoelectric component 204 and the example backing member 208 and a second portion 216 of the adhesive material may be disposed between the bottom surface of the piezoelectric component 204 and the impedance matching member 206. The use of the adhesive material ensures that there is there is a minimal or negligible gap between the example backing member 208 and the piezoelectric component 204 and between the impedance matching member 206 and the piezoelectric component 204.

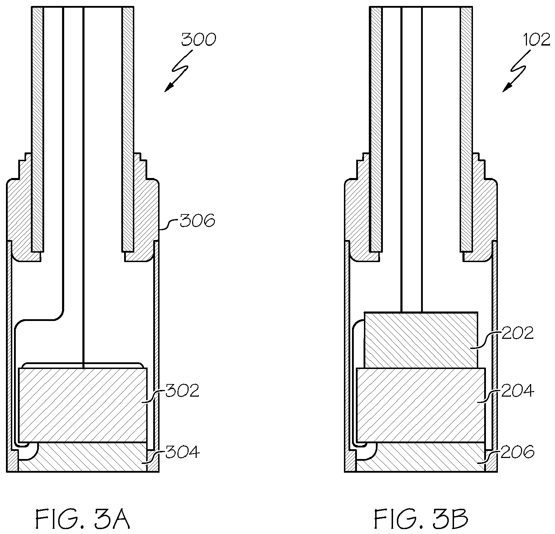

FIG. 3A depicts a design of an example ultrasonic transducer 300 that is conventionally available. As illustrated, the example ultrasonic transducer 300 may include an example piezoelectric component 302 and an example impedance matching member 304 disposed within an example enclosure 306. The example impedance matching member 304 adhered to or disposed on a bottom surface of the piezoelectric component 302. Further, as illustrated, the example ultrasonic transducer 300 does not include a backing member. In some embodiments, variations of the design of the example ultrasonic transducer 300 may include an attenuating material (not shown) that may disposed on a top surface of the example piezoelectric component 302. In aspects, such a material may be rigid and operate to reduce or attenuate vibration of the piezoelectric component 302. In contrast, as described above, the example backing members 202 and 208 are designed to be formed of a lower mass and lower density than the attenuating material that may be disposed on the top surface of the example piezoelectric component 302.

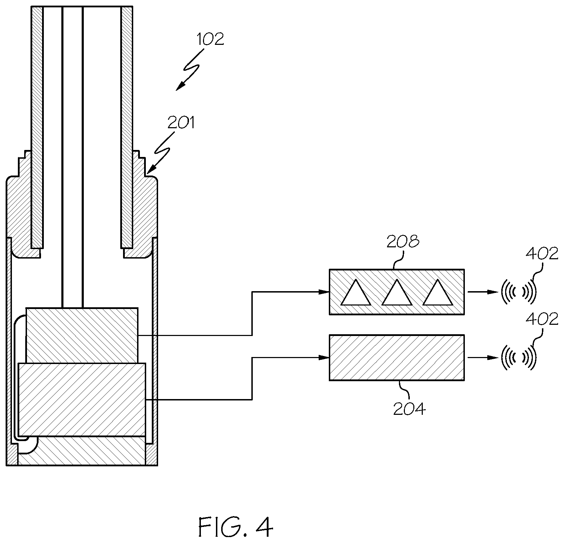

FIG. 3B depicts the ultrasonic transducer 102 that is illustrated in FIGS. 1 and 2A. In contrast to the example ultrasonic transducer 300 in FIG. 3A, the ultrasonic transducer 102 of FIG. 3B may include the backing member 202 that is disposed on a top surface of the piezoelectric component 204, which in turn may be disposed on a top surface of the impedance matching member 206. Further, in contrast to the example ultrasonic transducer 300 of FIG. 3A, the backing member 202 of the ultrasonic transducer 102 of FIG. 3B may be formed of a soft and flexible or malleable material that oscillates at particular rate that matches the rate at which the piezoelectric component 204 oscillates, as described in greater detail in FIG. 4.

FIG. 4 depicts a representation of an oscillation of the piezoelectric component 204 and the resulting oscillation of the example backing member 208 of the ultrasonic transducer 102, according to one or more aspects described and illustrated herein. The ultrasonic transducer 102 may include a piezoelectric component 204 that may receive an electric signal, e.g. from an outside source that is communicatively coupled to the ultrasonic transducer 102, and generate a sound wave by converting the received electric signal. In aspects, voltage that is utilized to power the ultrasonic transducer 102 may be provided by an external voltage source such as a function generator or a flowmeter pulser circuit. For example, in aspects, the piezoelectric component 204 may receive an electric signal and convert the signal to mechanical energy in the form of a sound wave by vibrating in accordance with a particular orientation. For example, in aspects, the vibration may be longitudinal. In other aspects, the vibration may occur in a radial direction. In aspects, the enclosure 201 of the ultrasonic transducer 102 corresponds to a substantially cylindrical shape, and as such, each of the components of the ultrasonic transducer 102 have a circular or disk shape, which enables the piezoelectric component 204 and the backing member 208 to fit within and closely contact or abut the inner surface of the enclosure 201.

In other aspects, when the piezoelectric component 204 vibrates in a longitudinal or radial direction, as described above, the vibration or oscillation may be in accordance with an oscillation rate 402. In aspects, the rate of oscillation of the piezoelectric component 204 may be in a range from 30 kHz to 250 kHz. The example backing member 208, which may include the plurality of apertures 210 that have a triangle shape, may also oscillate in accordance with the oscillation rate 402. In other words, the example backing member 208 may be formed of a flexible material having a density that enables the example backing member 208 to vibrate in accordance with the oscillation rate (e.g., oscillation rate 402) at which the piezoelectric component 204 vibrates.

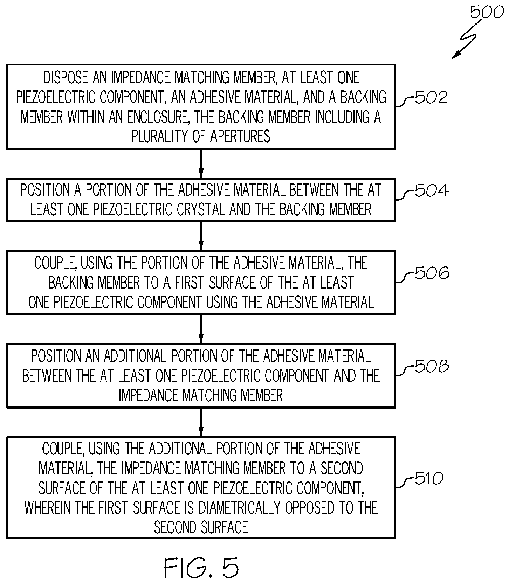

FIG. 5 depicts a flow chart 500 for configuring various parts of the ultrasonic transducer 102, according to one or more aspects described and illustrated herein.

In block 502, the ultrasonic transducer 102 may include an impedance matching member 206, a piezoelectric component 204, and the example backing member 202 or the example backing member 208 as illustrated in FIGS. 2A and 2B, respectively. The ultrasonic transducer 102 may also include adhesive material. If the example backing member disposed in the ultrasonic transducer 102 corresponds to the example backing member 208, such a member may include the plurality of apertures 210 disposed thereupon. As illustrated in FIGS. 2B, 2C, and 4, these apertures may be formed in a triangle shape. It is noted, however, that the apertures may be formed in other geometric shapes as well, e.g., a step configuration, a triangle configuration, a hexagonal configuration, a square configuration, or a circle configuration, and so forth. In other aspects, the example backing member 202 may be designed to have an example thickness 203 that is lighter than an example thickness 212 of the example backing member 208. However, due to the plurality of apertures 210 disposed on the example backing member 202, the overall mass and density of the backing member 208 is substantially similar to the mass and density of the example backing member 202. As such, the manner in which the example backing member 202 operates is substantially similar to the manner in which the backing member 208 operates.

In block 504, the first portion 214 of the adhesive material may be positioned between the piezoelectric component 204 and the backing member 208. As illustrated in FIGS. 2C, the first portion 214 of the adhesive material may be disposed between the piezoelectric component 204 and the example backing member 208 for securely bonding the piezoelectric component 204 to the example backing member 208.

In block 506, the piezoelectric component 204 may be coupled to the example backing member 208 using the first portion 214 of the adhesive material. As stated above, the piezoelectric component 204 may be bonded to the example backing member 208 such that there is a minimal or negligible gap between the example backing member 208 and the piezoelectric component 204.

In block 508, the second portion 216 of the adhesive material may be positioned between the piezoelectric component 204 and the impedance matching member 206. As illustrated in FIGS. 2C, the second portion 216 of the adhesive material may be disposed between the piezoelectric component 204 and the example impedance matching member 206 for securely bonding the piezoelectric component 204 to the impedance matching member 206.

In block 510, the piezoelectric component 204 may be coupled to the example impedance matching member 206 using the second portion 216 of the adhesive material. As stated above, the piezoelectric component 204 may be bonded to the example impedance matching member 206 such that there is a minimal or negligible gap between the example impedance matching member 206 and the piezoelectric component 204.

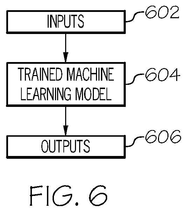

FIG. 6 depicts a trained machine learning (ML) model 604 that may be utilized to design the example backing members 202 and 208 of the ultrasonic transducer 102, according to one or more aspects described and illustrated herein. In some aspects, the trained machine learning model 604 may receive inputs 602 that are specific to various characteristics of the example backing members 202 and 208. For example, the inputs 602 may include a density that is specific to a particular material, sound speed, geometry and/or dimensions of the material (e.g., diameter, thickness, and so forth), attenuation values of the components of the ultrasonic transducer 102, input pulse shape, amplitude, transmission circuit components, and reception circuit components. Based on the inputs 602, the trained machine learning model 604 may generate outputs 606, e.g., signal amplitude and signal shape. In some aspects, these outputs may include, e.g., a thickness of the example backing members 202 and 208, a geometric shape or configuration (e.g., triangle configuration, step configuration, etc.) for the example backing member 208, and so forth. In this way, designers and engineers may be able to design and configure backing members that are specific to various applications and which are in accordance with particular density and sound speed requirements. In aspects, it is noted that the thickness of the backing members may be tuned or modified based on one or more of the above listed factors, e.g., density and sound speed.

Further non-limiting aspects or aspects are set forth in the following numbered clauses:
Example 1: An ultrasonic transducer comprising: an enclosure including an impedance matching member, at least one piezoelectric component, an adhesive material, and a backing member including a plurality of apertures disposed thereupon; wherein the impedance matching member is coupled to a first surface of the at least one piezoelectric component and the backing member is coupled to a second surface of the at least one piezoelectric component, the first surface is diametrically opposed to the second surface; and wherein the adhesive material is disposed between the at least one piezoelectric component and the backing member for coupling the at least one piezoelectric component to the backing member, and between the at least one piezoelectric component and the impedance matching member for coupling the at least one piezoelectric component to the impedance matching member.
Example 2: The ultrasonic transducer of example 1, wherein the first surface of the at least one piezoelectric component corresponds to a bottom surface of the at least one piezoelectric component.
Example 3: The ultrasonic transducer of example 1 or example 2, wherein the second surface of the at least one piezoelectric component corresponds to a top surface of the at least one piezoelectric component.
Example 4: The ultrasonic transducer of any of examples 1 to 3, wherein a density of the backing member is an range of 350 to 500 kilograms per cubic meter and the enclosure is formed of titanium.
Example 5: The ultrasonic transducer of any of examples 1 to 4, wherein each of the plurality of apertures corresponds to a pattern.
Example 6: The ultrasonic transducer of example 5, wherein the pattern corresponds to a step configuration, a triangle configuration, a hexagonal configuration, a square configuration, or a circle configuration.
Example 7: The ultrasonic transducer of any of examples 1-6, wherein a thickness of the backing member is in a range from 2 millimeters to 10 millimeters.
Example 8: The ultrasonic transducer of any of examples 1-7, wherein the at least one piezoelectric component oscillates in accordance with an oscillation rate.
Example 9: The ultrasonic transducer of any of example 8, wherein the at least one piezoelectric component oscillates in accordance with an oscillation rate.
Example 10: A method comprising: disposing an impedance matching member, at least one piezoelectric component, an adhesive material, and a backing member within an enclosure, the backing member including a plurality of apertures; positioning a portion of the adhesive material between the at least one piezoelectric component and the backing member; coupling, using the portion of the adhesive material, the backing member to a first surface of the at least one piezoelectric component using the adhesive material; position an additional portion of the adhesive material between the at least one piezoelectric component and the impedance matching member; and coupling, using the additional portion of the adhesive material, the impedance matching member to a second surface of the at least one piezoelectric component, wherein the first surface is diametrically opposed to the second surface.
Example 11: The method of example 10, wherein the first surface of the at least one piezoelectric component corresponds to a bottom surface of the at least one piezoelectric component.
Example 12: The method of example 10 or example 11, wherein the second surface of the at least one piezoelectric component corresponds to a top surface of the at least one piezoelectric component.
Example 13: The method of any of examples 10 to 12, wherein a density of the backing member is an range of 350 to 500 kilograms per cubic meter and the enclosure is formed of titanium.
Example 14: The method of any of examples 10 to 13, wherein each of the plurality of apertures corresponds to a pattern.
Example 15: The method of any of examples 10 to 14, wherein the pattern corresponds to a step configuration, a triangle configuration, a hexagonal configuration, a square configuration, or a circle configuration.
Example 16: The method of any of examples 10 to 15, wherein a thickness of the backing member is in a range from 2 millimeters to 10 millimeters.
Example 17: The method of any of examples 10 to 16, wherein the at least one piezoelectric component oscillates in accordance with an oscillation rate.
Example 18: The method of example 17, wherein the backing member oscillates in accordance with the oscillation rate at which the at least one piezoelectric component oscillates.
Example 19: An ultrasonic transducer system comprising: an enclosure including an impedance matching member, at least one piezoelectric component, an adhesive material, and a backing member including a plurality of apertures disposed thereupon in accordance with a pattern; wherein the at least one piezoelectric component oscillates in accordance with an oscillation rate and the backing member oscillates in accordance with the oscillation rate at which the at least one piezoelectric component oscillates; wherein the impedance matching member is coupled to a bottom surface of the at least one piezoelectric component and the backing member is coupled to a top surface of the at least one piezoelectric component, the bottom surface being diametrically opposed to the top surface; and wherein the adhesive material disposed between the at least one piezoelectric component and the backing member for coupling the at least one piezoelectric component to the backing member, and between the at least one piezoelectric component and the impedance matching member for coupling the at least one piezoelectric component to the impedance matching member.
Example 20: The ultrasonic transducer system of example 19, wherein a thickness of the backing member is in a range from 2 millimeters to 10 millimeters.

While there have been shown and described illustrative aspects that provide for online installations of ultrasonic steam measurement devices in steam pipes, it is to be understood that various other adaptations and modifications may be made within the spirit and scope of the aspects herein. For example, the aspects have been primarily shown and described herein with relation to steam-carrying pipes. However, the aspects in their broader sense are not as limited. Rather, the devices and techniques described herein may be applied to vessels carrying other forms of pressurized fluids, as well. Moreover, the device and techniques described herein may be applied to steam measurement devices other than ultrasound-based measurement devices. Thus, the aspects may be modified in any suitable manner in accordance with the scope of the present claims.

It should be understood that terminology used herein is for the purpose of describing particular aspects only and is not intended to be limiting of the disclosure. As used herein, the singular forms "a," "an," and "the" are intended to include the plural forms as well, unless the context clearly indicates otherwise. It will be further understood that the terms "comprises," "includes," or variations thereof, when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. The term "coupled" denotes a physical relationship between two components whereby the components are either directly connected to one another or indirectly connected via one or more intermediary components.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

The foregoing description has been directed to aspects of the present disclosure. It will be apparent, however, that other variations and modifications may be made to the described aspects, with the attainment of some or all of their advantages. Accordingly, this description is to be taken only by way of example and not to otherwise limit the scope of the aspects herein. Therefore, it is the object of the appended claims to cover all such variations and modifications as come within the true spirit and scope of the aspects herein.

## Claims

1. An ultrasonic transducer comprising:
an enclosure including an impedance matching member, at least one piezoelectric component, an adhesive material, and a backing member including a plurality of apertures disposed thereupon;
wherein the impedance matching member is coupled to a first surface of the at least one piezoelectric component and the backing member is coupled to a second surface of the at least one piezoelectric component, the first surface being diametrically opposed to the second surface; and
wherein the adhesive material is disposed between the at least one piezoelectric component and the backing member for coupling the at least one piezoelectric component to the backing member, and between the at least one piezoelectric component and the impedance matching member for coupling the at least one piezoelectric component to the impedance matching member.

2. The ultrasonic transducer of claim 1, wherein the first surface of the at least one piezoelectric component corresponds to a bottom surface of the at least one piezoelectric component.

3. The ultrasonic transducer of claim 1, wherein the second surface of the at least one piezoelectric component corresponds to a top surface of the at least one piezoelectric component.

4. The ultrasonic transducer of claim 1, wherein a density of the backing member is an range of 350 to 500 kilograms per cubic meter and the enclosure is formed of titanium.

5. The ultrasonic transducer of claim 1, wherein each of the plurality of apertures corresponds to a pattern.

6. The ultrasonic transducer of claim 5, wherein the pattern corresponds to a step configuration, a triangle configuration, a hexagonal configuration, a square configuration, or a circle configuration.

7. The ultrasonic transducer of claim 1, wherein a thickness of the backing member is in a range from 2 millimeters to 10 millimeters.

8. The ultrasonic transducer of claim 1, wherein the at least one piezoelectric component oscillates in accordance with an oscillation rate.

9. The ultrasonic transducer of claim 8, wherein the backing member oscillates in accordance with the oscillation rate at which the at least one piezoelectric component oscillates.

10. A method comprising:
disposing an impedance matching member, at least one piezoelectric component, an adhesive material, and a backing member within an enclosure, the backing member including a plurality of apertures;
positioning a portion of the adhesive material between the at least one piezoelectric component and the backing member;
coupling, using the portion of the adhesive material, the backing member to a first surface of the at least one piezoelectric component using the adhesive material;
position an additional portion of the adhesive material between the at least one piezoelectric component and the impedance matching member; and
coupling, using the additional portion of the adhesive material, the impedance matching member to a second surface of the at least one piezoelectric component, wherein the first surface is diametrically opposed to the second surface.

11. The method of claim 10, wherein the first surface of the at least one piezoelectric component corresponds to a bottom surface of the at least one piezoelectric component.

12. The method of claim 10, wherein the second surface of the at least one piezoelectric component corresponds to a top surface of the at least one piezoelectric component.

13. The method of claim 10, wherein a density of the backing member is an range of 350 to 500 kilograms per cubic meter and the enclosure is formed of titanium.

14. The method of claim 10, wherein each of the plurality of apertures corresponds to a pattern.

15. The method of claim 14, wherein the pattern corresponds to a step configuration, a triangle configuration, a hexagonal configuration, a square configuration, or a circle configuration.

16. The method of claim 10, wherein a thickness of the backing member is in a range from 2 millimeters to 10 millimeters.

17. The method of claim 10, wherein the at least one piezoelectric component oscillates in accordance with an oscillation rate.

18. The method of claim 17, wherein the backing member oscillates in accordance with the oscillation rate at which the at least one piezoelectric component oscillates.

19. An ultrasonic transducer system comprising:
an enclosure including an impedance matching member, at least one piezoelectric component, an adhesive material, and a backing member including a plurality of apertures disposed thereupon in accordance with a pattern;
wherein the at least one piezoelectric component oscillates in accordance with an oscillation rate and the backing member oscillates in accordance with the oscillation rate at which the at least one piezoelectric component oscillates;
wherein the impedance matching member is coupled to a bottom surface of the at least one piezoelectric component and the backing member is coupled to a top surface of the at least one piezoelectric component, the bottom surface being diametrically opposed to the top surface; and
wherein the adhesive material disposed between the at least one piezoelectric component and the backing member for coupling the at least one piezoelectric component to the backing member, and between the at least one piezoelectric component and the impedance matching member for coupling the at least one piezoelectric component to the impedance matching member.

20. The ultrasonic transducer system of claim 19, wherein a thickness of the backing member is in a range from 2 millimeters to 10 millimeters.
